# EUROPÄISCHE PATENTSCHRIFT

(11) **EP 3 438 424 B1**
(45) Veröffentlichungstag und Bekanntmachung des Hinweises auf die Patenterteilung: **09.02.2022**
(21) Anmeldenummer: 18182197.6
(22) Anmeldetag: 06.07.2018
(51) Int. Cl.: F01M 1/06, F01M 1/02, F16N 27/00, F01M 1/16, F01M 11/02

(54) **VORRICHTUNG ZUM SCHMIEREN EINER BRENNKRAFTMASCHINE**
DEVICE FOR LUBRICATING AN ENGINE
DISPOSITIF POUR LA LUBRIFICATION D'UN MOTEUR À COMBUSTION INTERNE

(30) Priorität: 02.08.2017 DE 102017117516
(43) Veröffentlichungstag der Anmeldung: 06.02.2019
(73) Patentinhaber: MAN Truck & Bus SE, 80995 München (DE)
(72) Erfinder: Malischewski, Thomas, 91560 Heilsbronn (DE); Renner, Dominik, 91522 Ansbach (DE)
(74) Vertreter: v. Bezold & Partner Patentanwälte - PartG mbB

(56) Entgegenhaltungen:
- DE-A1-102007 058 756
- DE-A1-102015 110 742
- JP-A- 2012 117 456
- US-A- 3 033 313
- US-A- 3 739 657
- US-A- 5 517 959

## Beschreibung

Die Erfindung betrifft eine Vorrichtung zum Schmieren einer Brennkraftmaschine, insbesondere zum Schmieren von Kurbelwellenlagern und Pleuelfußlagern einer Brennkraftmaschine.

Ein Schmierstoffkreislauf einer Brennkraftmaschine ist beispielsweise aus der DE 10 2007 058 756 A1 bekannt. Hier ist vorgesehen, dass in einem ersten Ölkanal mindestens ein erstes Stellmittel vorgesehen ist, mit welchem die Menge des durch den ersten Ölkanal zu einem ersten Ölabgabeorgan geförderten Schmierstoffes beeinflussbar ist.

Die DE 10 2014 105 236 A1 offenbart eine Schmiervorrichtung für die Versorgung von Lagerstellen innerhalb eines Kurbelgehäuses eines Verbrennungsmotors mit Schmiermittel. Die Schmiervorrichtung weist einen Verteilkanal mit zumindest einem Verteileinlass für Schmiermittel und wenigstens einen Zufuhrkanal für jede zu versorgende Lagerstelle, welcher vom Verteilkanal abzweigt, mit zumindest einem Zufuhrauslass, auf.

Bei heutigen Motoren wird ca. 25-35 % der Schmierfluidmenge zu den Kurbelwellenlagern und Pleuelfußlagern an der Kurbelwelle geleitet. Der Durchfluss durch die Lager hängt von der Spieltoleranz, dem Durchmesser, der Lagerbreite, den Schmierfluiddruck und der Schmierfluidtemperatur ab. Der Durchmesser und die Lagerbreite sind zumeist aus Bauraum- und Festigkeitsgründen vorgegeben und können nicht verändert werden. Bei niedrigen Schmierfluidtemperaturen lässt sich der Durchfluss durch die Lager verringern. Dies steht jedoch im Gegensatz zur gewünschten Reibungsminimierung in der Brennkraftmaschine, die mit zunehmender Öltemperatur sinkt. Mit steigendem Schmierfluiddruck steigt auch der Lagerdurchfluss. Dieser Zusammenhang ist nahezu linear.

Die US 5 517 959 A offenbart eine Schmiervorrichtung zur Verwendung in einem Motor mit einer Kurbelwelle, mindestens einem Lager für die Kurbelwelle und einer Ölwanne zum Speichern einer Schmierölvorratsbehälter. Die Vorrichtung umfasst eine Pumpe zum Pumpen des Öls aus der Ölwanne, einen Ölkanal zum Bereitstellen einer Fluidverbindung zwischen einer Drucköffnung der Pumpe und dem Lager, um das Öl dem Lager zuzuführen, und einen Ölumlaufkanal zum Bereitstellen einer Verbindung zwischen dem Lager und einer Einlassöffnung der Pumpe, um das Öl am Lager zur Pumpe zurückzuleiten. Die Vorrichtung beinhaltet ferner eine temperaturgesteuerte Ventilanordnung entlang des Rezirkulationskanals. Die Ventilanordnung ermöglicht es dem Öl, vom Lager zur Pumpe durch den Ölrückführkanal zurückzukehren, wenn die Temperatur des Motors unter einer vorgegebenen Temperatur liegt.

Die US 3 033 313 A offenbart eine Maschine mit einer drehbaren Welle und einem damit zusammenwirkenden Gleitlager, wobei das Lager einer zyklischen Belastung ausgesetzt ist. Eine Schmiervorrichtung umfasst eine Ölquelle, eine Ölpumpe, eine Leitung zwischen der Ölquelle und dem Pumpeneinlass, eine zweite Leitung zwischen dem Auslass der Pumpe und dem Lager und Steuermittel, die Teil der zweiten Leitung sind. In jedem Förderkanal befindet sich ein Drosselkörper. Die Drosseln sind so dimensioniert, dass sie den Anteil an der Gesamtfördermenge der Pumpe steuern.

Der Erfindung liegt die Aufgabe zu Grunde, eine verbesserte Vorrichtung zum Schmieren einer Brennkraftmaschine vorzusehen, die insbesondere weniger Schmierfluid benötigt, sodass beispielsweise eine kleiner ausgelegte Schmierfluidpumpe verwendet werden kann.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung ist zum Schmieren einer Brennkraftmaschine mit einer Kurbelwelle, die mit mindestens einem Pleuel verbunden ist, geeignet. Die Vorrichtung weist mindestens einen ersten Durchflussmengenbegrenzer, insbesondere eine Drossel, zum Reduzieren eines Schmierfluiddurchflusses eines zu dem mindestens einen ersten Durchflussmengenbegrenzer geleiteten Schmierfluidstroms auf. Die Vorrichtung weist eine Mehrzahl von Kurbelwellenlagern zum drehbaren Lagern der Kurbelwelle auf. Die Mehrzahl von Kurbelwellenlagern ist in Fluidverbindung stromabwärts von dem mindestens einen ersten Durchflussmengenbegrenzer vorgesehen. Die Vorrichtung weist mindestens ein Pleuelfußlager zum drehbaren Lagern des mindestens einen Pleuels auf. Das mindestens eine Pleuelfußlager ist in Fluidverbindung stromabwärts von mindestens einem Kurbelwellenlager der Mehrzahl von Kurbelwellenlagern vorgesehen.

Der mindestens eine erste Durchflussmengenbegrenzer reduziert die Schmierfluidmenge, die zu den Kurbelwellenlagern und dem mindestens einen Pleuelfußlager geleitet wird, gezielt. Das Schmierfluid erfüllt in den Lagern zwei Hauptaufgaben. Einerseits stellt das Schmierfluid eine rein hydrodynamische Reibung sicher und andererseits führt das Schmierfluid Wärme ab, die aufgrund der Lagerreibung entstanden ist. Es wurde erkannt, dass die Dicke des hydrodynamischen Spielfilms keine Funktion des Öldrucks ist. Stattdessen hängt die Dicke des Schmierfilms maßgeblich von der Viskosität des Schmierfluids und der Flächenpressung im Lager ab. So reichen für den Wärmeabtransport der Lagerreibung selbst geringe Lagerdurchflüsse aus, zum Beispiel bis ungefähr 2 kg/min bei einem Nutzfahrzeug. Die gezielte Reduzierung der Schmierfluidmenge durch den mindestens einen ersten Durchflussmengenbegrenzer beeinträchtigt somit weder die Sicherstellung der rein hydrodynamischen Reibung noch den Wärmeabtransport. Durch die gezielte Reduzierung der Schmierfluidmenge/des Schmierfluiddrucks ist es möglich, die insgesamt benötigte Schmierfluiddurchflussmenge zum Schmieren der Brennkraftmaschine zu verringern. Damit kann beispielsweise eine kleiner ausgelegte Schmierfluidpumpe verwendet und eine Antriebsleistung für die Schmierfluidpumpe verringert werden.

Insbesondere können die Kurbelwellenlager an Kurbelwellenlagerzapfen der Kurbelwelle angeordnet sein und das mindestens eine Pleuelfußlager an mindestens einem Pleuellagerzapfen der Kurbelwelle angeordnet sein.

In einem Ausführungsbeispiel weist die Vorrichtung einen Schmierfluidverteilkanal auf, der in Fluidverbindung stromaufwärts von der Mehrzahl von Kurbelwellenlagern vorgesehen ist. Der Schmierfluidverteilkanal kann insbesondere als eine Kubelwellenlagergalerie ausgebildet sein. Zusätzlich kann die Vorrichtung eine Mehrzahl von Schmierfluidzufuhrkanälen aufweisen, die jeweils in Fluidverbindung stromabwärts von dem Schmierfluidverteilkanal und stromaufwärts von einem Kurbelwellenlager der Mehrzahl von Kurbelwellenlagern vorgesehen sind. Über den Schmierfluidverteilkanal und die Schmierfluidzufuhrkanäle kann Schmierfluid von dem ersten Durchflussmengenbegrenzer zu den Kurbelwellenlagern zugeführt werden.

In einer Weiterbildung ist der mindestens eine erste Durchflussmengenbegrenzer in Fluidverbindung stromaufwärts von dem Schmierfluidverteilkanal und/oder in dem Schmierfluidverteilkanal vorgesehen. Bei einer derartigen Ausführungsform kann insbesondere nur ein einziger Durchflussmengenbegrenzer benötigt werden, der die Schmierfluidmenge aufgrund seiner Anordnung für alle Kurbelwellenlager und Pleuelfußlager verringert.

Insbesondere kann der mindestens eine erste Durchflussmengenbegrenzer in einer Kubelwellenlagergalerie integriert sein.

In einem weiteren Ausführungsbeispiel ist in jedem der Mehrzahl von Schmierfluidzufuhrkanälen ein erster Durchflussmengenbegrenzer angeordnet. Damit wird je Schmierfluidzufuhrkanal ein Durchflussmengenbegrenzer benötigt. Dies kann beispielsweise aus Gründen eines verbesserten Zugangs beim Warten der Brennkraftmaschine vorteilhaft sein.

In einer besonders bevorzugten Ausführungsvariante ist das mindestens eine Pleuelfußlager unabhängig von einer Drehposition der Kurbelwelle über das mindestens eine Kurbelwellenlager der Mehrzahl von Kurbelwellenlagern in im Wesentlichen kontinuierlicher Fluidverbindung mit dem mindestens einen ersten Durchflussmengenbegrenzer vorgesehen. Damit kann auch bei niedrigen Schmierfluiddurchflussmengen eine ausreichende Schmierung der Pleuelfußlager sichergestellt werden. Das Problem einer nicht durchgängigen Druckschmierfluidversorgung besteht bei hohen Motordrehzahl in der Kavitationsbildung in der Pleuellagerbohrung. Hier kann es zum Verdampfen des Schmierfluids infolge der Zentrifugalkraft kommen. Die entstehenden Dampfblasen implodieren langsam und sorgen dafür, dass der Schmierfluiddurchfluss zu den Pleuelfußlagern erheblich gedrosselt wird. Bei durchgängiger (kontinuierlicher) Fluidverbindung kann das Kavitationsrisiko erheblich verringert werden.

In einer Ausführungsvariante sind Schmierfluidkänale, insbesondere Schmierfluidbohrungen, in der Kurbelwelle und Schmierfluidlagernuten in Lagerschalen der Mehrzahl von Kurbelwellenlager so ausgebildet, dass die im Wesentlichen kontinuierliche Fluidverbindung zu dem mindestens einen Pleuelfußlager vorgesehen ist.

In einer weiteren Ausführungsvariante ist das mindestens eine Pleuelfußlager in Fluidverbindung mit dem mindestens einen Kurbelwellenlager der Mehrzahl von Kurbelwellenlagern über mindestens einen in der Kurbelwelle vorgesehenen Kurbelwellenschmierfluidkanal vorgesehen. Beispielsweise kann der Kurbelwellenschmierfluidkanal aus einer Mehrzahl von miteinander verbundenen Bohrungen in der Kurbelwelle bestehen.

In einer Weiterbildung weist der mindestens eine Kurbelwellenschmierfluidkanal mindestens zwei voneinander beabstandete Einlassöffnungen auf, die in eine Außenumfangsfläche eines Kurbelwellenlagerzapfens der Kurbelwelle münden. Im Gegensatz dazu weisen bekannte Kurbelwellenschmierfluidkanäle im Bereich des Kurbelwellenlagerzapfens lediglich eine einfache Bohrung (Sacklochbohrung) auf, die in Abhängigkeit von einer Drehposition der Kurbelwelle keine kontinuierliche Fluidverbindung zu den Pleuelfußlagern ermöglicht.

Insbesondere können die Einlassöffnungen so angeordnet sein, dass sich insbesondere in Kombination mit einer Ausbildung einer Schmierfluidlagernut eines Kurbelwellenlagers eine im Wesentlichen kontinuierliche Fluidverbindung zu dem mindestens einen Pleuelfußlager ergibt.

In einer bevorzugten Ausführungsvariante weist der mindestens eine Kurbelwellenschmierfluidkanal eine Durchgangsbohrung in einem Kurbelwellenlagerzapfen auf. Die Durchgangsbohrung kann sich beispielsweise im Wesentlichen senkrecht zu einer Längsachse der Kurbelwelle erstrecken. Die Durchgangsbohrung ist einfach herstellbar und führt zur Ausbildung von zwei Einlassöffnungen für den Kurbelwellenschmierfluidkanal, sodass eine kontinuierliche Fluidverbindung zu dem mindestens einem Pleuelfußlager ermöglicht wird.

In einer Ausführungsform weist die Mehrzahl von Kurbelwellenlagern jeweils eine Schmierfluidlagernut auf, die sich über einen Winkelbereich von mindestens 180° erstreckt. Damit kann in Kombination mit entsprechend angeordneten Einlassöffnungen des mit den Pleuelfußlagern in Fluidverbindung stehenden Kurbelwellenschmierfluidkanals eine kontinuierliche Fluidverbindung ermöglicht werden.

In einem weiteren Ausführungsbeispiel weist die Vorrichtung ferner mindestens ein Pleuelkopflager auf, das in Fluidverbindung, insbesondere über einen Pleuellängskanal (z. B. eine Pleuellängsbohrung), stromabwärts von einem Pleuelfußlager des mindestens einen Pleuelfußlagers vorgesehen ist.

Vorzugsweise kann das mindestens eine Pleuelkopflager als ein Gleitlager ausgebildet sein.

Bevorzugt kann das mindestens eine Pleuelkopflager einen Kolben der Brennkraftmaschine drehbar am Pleuel lagern, zum Beispiel über einen Kolbenbolzen.

In einer weiteren Ausführungsform weist die Vorrichtung ferner mindestens ein Rädertrieblager zum drehbaren Lagern eines Rads eines Rädertriebs der Brennkraftmaschine auf, wobei, insbesondere, das mindestens eine Rädertrieblager in Fluidverbindung stromabwärts von dem Schmierfluidverteilkanal und/oder dem mindestens einen ersten Durchflussmengenbegrenzer vorgesehen ist. Damit kann die Vorrichtung auch zum Schmieren von (Zahn-) Rädern von Komponenten des Rädertriebs verwendet werden, zum Beispiel, einem Lager eines Nockenwellenantriebs, einem Lager eines Nebenantriebs (PTO- power take off), einem Lager einer Hochdruckpumpe und einem Lager eines Lüfterzahnrads.

In einem weiteren Ausführungsbeispiel weist die Vorrichtung ferner eine Mehrzahl von Nockenwellenlagern zum drehbaren Lagern einer Nockenwelle, eine Mehrzahl von Nockenfolgerlagern zum drehbaren Lagern von Nockenfolgern, eine Mehrzahl von Kugelfüßen an Kipphebeln der Brennkraftmaschine und/oder mindestens eine Kolbenkühldüse zum Spritzen von Schmierfluid an mindestens einen Kolben der Brennkraftmaschine, der mit dem mindestens einen Pleuel verbunden ist, auf. Damit kann das der Vorrichtung zugeführte Schmierfluid zum Schmieren einer Vielzahl von Komponenten der Brennkraftmaschine verwendet werden.

Insbesondere können die Nockenwelle, die Kipphebel, die Nockenfolger, die Nockenfolgerlager und die Kugelfüße in einem Zylinderkopf der Brennkraftmaschine vorgesehen sein.

In einer Weiterbildung weist die Vorrichtung mindestens einen zweiten Durchflussmengenbegrenzer, insbesondere eine Drossel, auf, der in Fluidverbindung stromaufwärts von der Mehrzahl von Kurbelwellenlagern, der Mehrzahl von Nockenfolgerlagern und/oder der Mehrzahl von Kugelfüßen vorgesehen sind. Damit kann auch eine Schmierfluiddurchflussmenge zu den Nockenwellenlagern, den Nockenfolgerlagern und/oder den Kugelfüßen auf einen geringen Wert eingestellt werden. Dies kann eine kleiner ausgelegte Schmierfluidpumpe und eine geringere Antriebsleistung für die Schmierfluidpumpe ermöglichen.

Insbesondere können der mindestens eine erste Durchflussmengenbegrenzer und der mindestens eine zweite Durchflussmengenbegrenzer den jeweils zugeführten Schmierfluidstrom unterschiedlich verringern. Damit können gezielt die benötigten Schmierfluidmengen für die jeweiligen Komponenten, die stromabwärts der Durchflussmengenbegrenzer vorgesehen sind, eingestellt werden. Die gezielte Einstellung ermöglicht eine weitere Optimierung der insgesamt benötigten Schmierfluidmenge, sodass eine Schmierfluidpumpe der Vorrichtung kleiner ausgelegt werden kann.

In einer Ausführungsvariante weist die Vorrichtung zudem eine Schmierfluidpumpe auf, die in Fluidverbindung stromaufwärts von dem mindestens einen ersten Durchflussmengenbegrenzer vorgesehen ist. Vorzugsweise können der mindestens eine zweite Durchflussmengenbegrenzer, das mindestens eine Rädertrieblager, die Mehrzahl von Nockenwellenlagern, die Mehrzahl von Nockenfolgerlagern, die Mehrzahl von Kugelfüßen und/oder die mindestens eine Kolbenkühldüse in Fluidverbindung stromabwärts von der Schmierfluidpumpe vorgesehen sein.

Vorzugsweise können der mindestens eine erste Durchflussmengenbegrenzer und der mindestens eine zweite Durchflussmengenbegrenzer in Fluidverbindung stromabwärts von einer Schmierfluidpumpe der Vorrichtung vorgesehen sein. Bevorzugt kann stromabwärts der Schmierfluidpumpe eine Verzweigung vorgesehen sein, die einerseits zu dem mindestens einen ersten Durchflussmengenbegrenzer und andererseits zu dem mindestens einen zweiten Durchschussmengenbegrenzer führt.

Die Vorrichtung kann ferner insbesondere einen Schmierfluidfilter und/oder einen Schmierfluidkühler aufweisen, die in Fluidverbindung stromabwärts von der Schmierfluidpumpe vorgesehen sind.

Es ist möglich, dass der Schmierfluidfilter und der Schmierfluidkühler in Reihe angeordnet sind, und insbesondere in Fluidverbindung stromaufwärts der zu schmierenden und/oder zu kühlenden Lager, Lagerstellen usw. vorgesehen sind.

Es ist auch möglich, dass der Schmierfluidfilter und der Schmierfluidkühler parallel zueinander stromabwärts der Schmierfluidpumpe vorgesehen sind. Das Schmierfluid kann sich nach der Schmierfluidpumpe in Schmierfluidkühler und Schmierfluidfilter parallel aufteilen. Stromabwärts von dem Schmierfluidfilter kann das Schmierfluid bspw. zu allen Schmierstellen (Lager, Lagerstelle) geleitet werden. Stromabwärts von dem Schmierfluidkühler kann das Schmierfluid bspw. (nur) zu den Kolbenkühldüsen geleitet werden.

Vorzugsweise kann das Schmierfluid stromabwärts der Schmierstellen (Lager, Lagerstellen usw.) zu der Schmierfluidpumpe zum Bilden eines Schmierfluidkreislaufes geleitet werden.

In einem bevorzugten Ausführungsbeispiel sind das mindestens eine Pleuelfußlager und/oder die Mehrzahl von Kurbelwellenlagern als Gleitlager ausgebildet.

Gemäß einem weiteren Gesichtspunkt betrifft die Erfindung ein Kraftfahrzeug, insbesondere Nutzfahrzeug (zum Beispiel Omnibus oder Lastkraftwagen), mit einer Vorrichtung zum Schmieren einer Brennkraftmaschine wie hierin offenbart.

Es ist allerdings auch möglich, die Vorrichtung zum Schmieren wie hierin offenbart in Brennkraftmaschinen zu verwenden, die nicht in Kraftfahrzeugen verwendet werden, zum Beispiel bei stationären Brennkraftmaschinen, auf Schiffen, in Zügen usw.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Kurbelwelle mit verbundenen Pleueln;
- Figur 2: eine schematische Ansicht eines Ventiltriebs mit einer Nockenwelle, einem Kipphebel und einem Gaswechselventilen; und
- Figur 3: eine schematische Ansicht einer Vorrichtung zum Schmieren einer Brennkraftmaschine.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

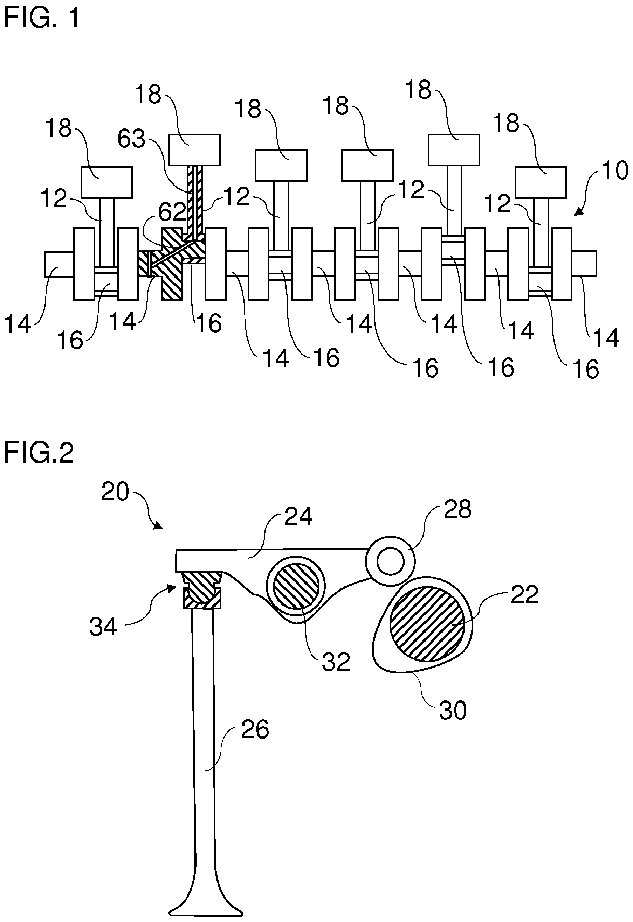

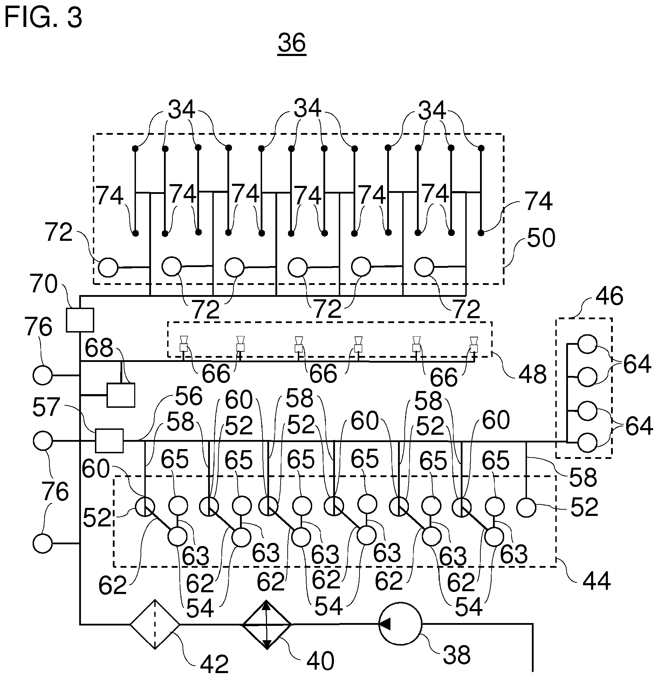

Um die Verständlichkeit zu verbessern werden zunächst unter Bezugnahme auf die Figuren 1 und 2 einige Komponenten einer beispielhaften Brennkraftmaschine beschrieben. Diese Komponenten werden von der hierin offenbarten Vorrichtung zum Schmieren mit einem Schmierfluid versorgt, wie unter Bezugnahme auf Figur 3 näher beschrieben ist.

In Figur 1 sind eine Kurbelwelle 10 und Pleuel 12 einer Brennkraftmaschine gezeigt. Die Brennkraftmaschine kann beispielsweise in einem Nutzfahrzeug, zum Beispiel einem Omnibus oder einem Lastkraftwagen, umfasst sein.

Die Kurbelwelle 10 weist abwechselnd Lagerzapfen 14 und 16 auf. Über die Lagerzapfen 14 ist die Kurbelwelle 10 über als Gleitlager ausgebildete Kurbelwellenlager drehbar in Lagerböcken gelagert. An den Lagerzapfen 16 sind Pleuelfußenden der Pleuel 12 in als Gleitlager ausgebildete Pleuelfußlager drehbar gelagert. Die Pleuel (Pleuelstangen) 12 tragen Kolben 18. Die Kolben 18 bewegen sich während des Betriebs der Brennkraftmaschine jeweils in einem Zylinder hin und her.

Während des Betriebs der Brennkraftmaschine müssen beispielsweise die Gleitlager an den Lagerzapfen 14 und 16 geschmiert werden. Zusätzlich müssen die sich in den Zylindern hin- und her bewegenden Kolben 18 geschmiert werden.

In Figur 2 ist ein Ventiltrieb 20 gezeigt. Der Ventiltrieb 20 weist eine Nockenwelle 22, einen Kipphebel 24 und ein Gaswechselventil 26, zum Beispiel ein Einlassventil oder ein Auslassventil, auf. Für eine Mehrzahl von Zylindern und eine Mehrzahl von Ein- und Auslassventilen kann die Brennkraftmaschine eine Mehrzahl von Ventiltrieben 20 aufweisen.

Ein Nockenfolger 28 des Kipphebels 24 folgt einer Nockenkontur eines Nockens 30 der Nockenwelle 22. Der Nockenfolger 28 kann beispielsweise als eine Rolle ausgebildet sein, die um eine Nockenfolgerachse drehbar ist. Der Kipphebel 24 ist um eine Kipphebelachse 32 drehbar. Über einen Kugelfuß (sogenannter Elefantenfuß) 34 betätigt der Kipphebel 24 das Gaswechselventil 26, wenn der Nockenfolger 28 in Kontakt mit einem Ventilhubbereich des Nockens 30 gelangt.

Während des Betriebs der Brennkraftmaschine müssen beispielsweise der drehbare Nockenfolger 28 und der Kugelfuß 34 mit einem Schmierfluid geschmiert werden. Das Schmierfluid kann beispielsweise über die Kipphebelachse 32 und Schmierfluidkanäle im Kipphebel 24 zugeführt werden.

Die Figur 3 zeigt eine Vorrichtung 36 zum Schmieren von Komponenten der Brennkraftmaschine. Die Vorrichtung 36 weist eine Schmierfluidpumpe 38, einen Schmierfluidkühler 40, einen Schmierfluidfilter 42 und verschiedene zu schmierende Bereiche 44, 46, 48 und 50 auf.

Die Schmierfluidpumpe 38 saugt ein Schmierfluid, zum Beispiel Öl, an. Ein von der Schmierfluidpumpe 38 bereitgestellter Schmierfluidstrom wird zum Kühlen des Schmierfluids zu dem Schmierfluidkühler 40 geleitet. Der gekühlte Schmierfluidstrom wird zu dem Schmierfluidfilter 42 geleitet. Der gekühlte und gefilterte Schmierfluidstrom steht stromabwärts des Schmierfluidfilters 42 zum Schmieren und Kühlen von Komponenten der Brennkraftmaschine zur Verfügung.

Die zu schmierenden Bereiche 44, 46, 48 und 50 sind in Fluidverbindung stromabwärts von der Schmierfluidpumpe 38, dem Schmierfluidkühler 40 und dem Schmierfluidfilter 42 vorgesehen.

Der Bereich 44 betrifft die Kurbelwellenlager 52 und Pleuelfußlager 54 an der Kurbelwelle 10 (siehe Figur 1). Ein Schmierfluidverteilkanal 56 verteilt den empfangenen Schmierfluidstrom auf eine Mehrzahl (sechs in dem gezeigten Ausführungsbeispiele) von Schmierfluidzufuhrkanälen 58. Stromaufwärts des Schmierfluidverteilkanals 56 ist eine Drossel 57 vorgesehen.

Über die Drossel 57 kann ein Schmierfluidstrom zu den zu schmierenden Bereichen 44 und 46 verringert werden. Der verringerte Schmierfluidstrom ermöglicht, dass mehr Schmierfluid für die anderen zu schmierenden Bereiche 48, 50 zur Verfügung steht und/oder die Schmierfluidpumpe 38 kleiner und damit preiswerter ausgelegt werden kann. Alternativ oder zusätzlich zu der Drossel 57 kann beispielsweise je eine Drossel in jedem Schmierfluidzufuhrkanal 58 vorgesehen sein.

Die Schmierfluidzufuhrkanäle 58 führen das Schmierfluid zu den Kurbelwellenlagern (Hauptlagern) 52, in denen die Kurbelwelle 10 über die Lagerzapfen 14 (siehe Figur 1) drehbar gelagert ist. Die Pleuelfußlager 54 sind in Fluidverbindung stromabwärts von den Kurbelwellenlagern 52 vorgesehen. Die Pleuelfußlager 54 lagern das Pleuel 12 drehbar an den Lagerzapfen 16 der Kurbelwelle 10 (siehe Figur 1).

Die Schmierfluidzufuhrkanäle 58 erstrecken sich zumindest teilweise innerhalb von Lagerböcken für die Kurbelwelle 10 (siehe Figur 1) und führen den Schmierfluidstrom zu den Kurbelwellenlagern 52. Über Lagernuten 60 in den Kurbelwellenlagern 52 gelangt der Schmierfluidstrom zu Kurbelwellenschmierfluidkanälen 62. Die Lagernuten 60 können insbesondere in einer oberen Lagerschale der Kurbelwellenlager 52 angeordnet sein. Die Kurbelwellenschmierfluidkanäle 62 leiten den Schmierfluidstrom zu den Pleuelfußlagern 54. Die Kurbelwellenschmierfluidkanäle 62 verlaufen innerhalb der Kurbelwelle 10, jeweils von einem der Lagerzapfen 14 zu einem der Lagerzapfen 16 (siehe Figur 1).

Die Drossel 57 bewirkt eine verringerte Schmierfluiddurchflussmenge zu den Lagern 52, 54. Um auch bei der verringerten Schmierfluiddurchflussmenge eine ausreichende Schmierung der Pleuelfußlager 54 zu gewährleisten, kann es notwendig sein, die Fluidverbindung zu den Pleuelfußlagern 54 so auszugestalten, dass eine kontinuierliche Versorgung mit Schmierfluid ermöglicht wird. Daher weisen im vorliegenden Ausführungsbeispiel die Kurbelwellenschmierfluidkanäle 62 jeweils zwei Einlassöffnungen im Lagerzapfen 14 auf (siehe Figur 1). Die Einlassöffnungen sind so angeordnet, dass in Kombination mit einer sich um mindestens 180° erstreckenden Lagernut 60 der Kurbelwellenlager 52 eine im Wesentlichen kontinuierliche Fluidverbindung von den Schmierfluidzuführkanälen 58 über die Lagernuten 60 der Kurbelwellenlager 52 und die Kurbelwellenschmierfluidkanäle 62 zu den Pleuelfußlagern 54 gewährleistet wird, unabhängig von einer Drehposition der Kurbelwelle 10 (siehe auch Figur 1). Eine konstruktiv besonders einfache Variante zum Ausbilden von zwei Einlassöffnungen für jeden Schmierfluidkanal 62 kann durch Vorsehen einer Durchgangsbohrung in dem Lagerzapfen 14 bereitgestellt werden (siehe ebenfalls Figur 1). In anderen Ausführungsformen können auch andere Konstruktionen oder Verfahren verwendet werden, um eine im Wesentlichen kontinuierliche Fluidverbindung zwischen den Schmierfluidzuführkanälen 58 und den Pleuelfußlagern 54 zu ermöglichen.

In einigen Ausführungsbeispielen, wie in dem Beispiel, das in den Figuren 1 und 3 dargestellt ist, können zusätzlich Pleuelkopflager 65 in Fluidverbindung stromabwärts von den Pleuelfußlagern 54 vorgesehen sein. Die Fluidverbindung kann über einen bspw. gebohrten Pleuellängskanal 63 im Pleuel 18 hergestellt werden. Über die Pleuelkopflager 65 kann der Kolben 18 drehbar mit dem Pleuel 12 mittels eines Kolbenbolzens (nicht dargestellt) verbunden werden.

Stromabwärts der Drossel 57 und des Schmierfluidverteilkanals 56 sind zu schmierende Komponenten eines Rädertriebs der Brennkraftmaschine im Bereich 46 schematisch zusammengefasst. Die zu schmierenden Rädertrieblager 64 des Rädertriebs 46 können beispielsweise ein Lager eines Nockenwellenantriebs, ein Lager eines Nebenantriebs (PTO- power take off), ein Lager einer Hochdruckpumpe der Brennkraftmaschine und ein Lager eines Lüfterzahnrads aufweisen.

Der zu schmierende und zu kühlende Bereich 48 ist in Fluidverbindung stromabwärts von dem Schmierfluidfilter 42, dem Schmierfluidkühler 40 und der Schmierfluidpumpe 38 vorgesehen. Der zu schmierende und zu kühlende Bereich 48 weist Kolbenkühldüsen 66 auf. Über die Kolbenkühldüsen 66 wird Schmierfluid von unten an die Kolben 18 gespritzt, um die Hin- und Herbewegung des Kolbens 18 im jeweiligen Zylinder zu schmieren und die Kolben 18 zu kühlen. Die Kolben 18 können, für eine zusätzliche Kühlung, mit einem Kolbenkühlkanal (nicht dargestellt) versehen sein. Über ein Ventil 68 kann ein Schmierfluidstrom zu den Kolbenkühldüsen 66 gesteuert werden.

Der zu schmierende Bereich 50 betrifft zu schmierende Komponenten eines Zylinderkopfes der Brennkraftmaschine. Der zu schmierende Bereich 50 ist in Fluidverbindung stromabwärts von dem Schmierfluidfilter 42, dem Schmierfluidkühler 40 und der Schmierfluidpumpe 38 vorgesehen. Über eine zweite Drossel 70 kann ein Schmierfluidstrom zu dem Bereich 50 eingestellt werden. Der verringerte Schmierfluidstrom ermöglicht, dass mehr Schmierfluid für die anderen zu schmierenden Bereiche 44, 46, 48 zur Verfügung steht und/oder die Schmierfluidpumpe 38 kleiner und damit preiswerter ausgelegt werden kann.

Innerhalb des Zylinderkopfes werden Nockenwellenlager 72 der Nockenwelle 22 (siehe Figur 1) mit Schmierfluid versorgt. Beispielsweise kann eine gemeinsame Nockenwelle für die Einlassventile und die Auslassventile der Brennkraftmaschine vorgesehen sein. Es ist allerdings auch möglich, dass getrennte Nockenwellen für die Einlassventile und die Auslassventile vorgesehen sind.

Zusätzlich wird das Schmierfluid zu den Kipphebeln 24, beispielsweise über die Kipphebelachse 32, geleitet (siehe Figur 1). Das Schmierfluid kann zum Schmieren von Lagern 74 der Nockenfolger 28 und zum Schmieren der Kugelfüße 34 der Kipphebel 24 verwendet werden (siehe ebenfalls Figur 1).

Die Vorrichtung 36 kann weitere Lagerstellen 76 zum Schmieren von Komponenten der Brennkraftmaschine aufweisen. Zum Beispiel kann ein Lager einer Drehwelle eines Turboladers mit Schmierfluid versorgt werden.

### Bezugszeichenliste

- 10: Kurbelwelle
- 12: Pleuel
- 14: Lagerzapfen
- 16: Lagerzapfen
- 18: Kolben
- 20: Ventiltrieb
- 22: Nockenwelle
- 24: Kipphebel
- 26: Gaswechselventil
- 28: Nockenfolger
- 30: Nocken
- 32: Kipphebelachse
- 34: Kugelfuß (Elefantenfuß)
- 36: Vorrichtung zum Schmieren
- 38: Schmierfluidpumpe
- 40: Schmierfluidkühler
- 42: Schmierfluidfilter
- 44: Zu schmierender Bereich (Kurbelwellen- und Pleuelfußlager)
- 46: Zu schmierender Bereich (Rädertrieb)
- 48: Zu schmierender Bereich (Kolbenkühldüsen)
- 50: Zu schmierender Bereich (Zylinderkopf)
- 52: Kurbelwellenlager (Hauptlager)
- 54: Pleuelfußlager
- 56: Schmierfluidverteilkanal
- 57: Erste Drossel
- 58: Schmierfluidzuführkanal
- 60: Lagernut
- 62: Kurbelwellenschmierfluidkanal
- 63: Pleuellängskanal
- 64: Rädertrieblager
- 65: Pleuelkopflager
- 66: Kolbenkühldüse
- 68: Ventil
- 70: Zweite Drossel
- 72: Nockenwellenlager
- 74: Nockenfolgerlager
- 76: Lagerstelle

## Patentansprüche

1. Vorrichtung (36) zum Schmieren einer Brennkraftmaschine mit einer Kurbelwelle (10), die mit mindestens einem Pleuel (12) verbunden ist, aufweisend:
mindestens einen ersten Durchflussmengenbegrenzer (57), insbesondere eine Drossel, zum Reduzieren eines Schmierfluiddurchflusses eines zu dem mindestens einen ersten Durchflussmengenbegrenzer (57) geleiteten Schmierfluidstroms;
eine Mehrzahl von Kurbelwellenlagern (52) zum drehbaren Lagern der Kurbelwelle (10), wobei die Mehrzahl von Kurbelwellenlagern (52) in Fluidverbindung stromabwärts von dem mindestens einen ersten Durchflussmengenbegrenzer (57) vorgesehen sind; und
mindestens ein Pleuelfußlager (54) zum drehbaren Lagern des mindestens einen Pleuels (12), wobei das mindestens eine Pleuelfußlager (54) in Fluidverbindung stromabwärts von mindestens einem Kurbelwellenlager (52) der Mehrzahl von Kurbelwellenlagern (52) vorgesehen ist,
**gekennzeichnet durch:**
mindestens ein Rädertrieblager (64) zum drehbaren Lagern eines Rads eines Rädertriebs (46) der Brennkraftmaschine, wobei das mindestens eine Rädertrieblager (64) in Fluidverbindung stromabwärts von dem mindestens einen ersten Durchflussmengenbegrenzer (57) vorgesehen ist.

2. Vorrichtung (36) nach Anspruch 1, ferner aufweisend:
einen Schmierfluidverteilkanal (56), insbesondere eine Kubelwellenlagergalerie, der in Fluidverbindung stromaufwärts von der Mehrzahl von Kurbelwellenlagern (52) vorgesehen ist; und
eine Mehrzahl von Schmierfluidzufuhrkanälen (58), die jeweils in Fluidverbindung stromabwärts von dem Schmierfluidverteilkanal (56) und stromaufwärts von einem Kurbelwellenlager (52) der Mehrzahl von Kurbelwellenlagern (52) vorgesehen sind.

3. Vorrichtung (36) nach Anspruch 2, wobei der mindestens eine erste Durchflussmengenbegrenzer (57) in Fluidverbindung stromaufwärts von dem Schmierfluidverteilkanal (56) und/oder in dem Schmierfluidverteilkanal (56) vorgesehen ist.

4. Vorrichtung (36) nach Anspruch 2 oder Anspruch 3, wobei in jedem der Mehrzahl von Schmierfluidzufuhrkanälen (58) ein erster Durchflussmengenbegrenzer (57) angeordnet ist.

5. Vorrichtung (36) nach einem der vorherigen Ansprüche, wobei das mindestens eine Pleuelfußlager (54) unabhängig von einer Drehposition der Kurbelwelle (10) über das mindestens eine Kurbelwellenlager (52) der Mehrzahl von Kurbelwellenlagern (52) in im Wesentlichen kontinuierlicher Fluidverbindung mit dem mindestens einen ersten Durchflussmengenbegrenzer (57) vorgesehen ist.

6. Vorrichtung nach Anspruch 5, wobei Schmierfluidkänale (62), insbesondere Schmierfluidbohrungen, in der Kurbelwelle (10) und Schmierfluidlagernuten (60) in Lagerschalen der Mehrzahl von Kurbelwellenlagern (52) so ausgebildet sind, dass die im Wesentlichen kontinuierliche Fluidverbindung zu dem mindestens einen Pleuelfußlager (54) vorgesehen ist.

7. Vorrichtung (36) nach einem der vorherigen Ansprüche, wobei:
das mindestens eine Pleuelfußlager (54) in Fluidverbindung mit dem mindestens einen Kurbelwellenlager (52) der Mehrzahl von Kurbelwellenlagern (52) über mindestens einen in der Kurbelwelle (10) vorgesehenen Kurbelwellenschmierfluidkanal (62) vorgesehen ist; und
der mindestens eine Kurbelwellenschmierfluidkanal (62) mindestens zwei voneinander beabstandete Einlassöffnungen aufweist, die in eine Außenumfangsfläche eines Kurbelwellenlagerzapfens (14) der Kurbelwelle (10) münden.

8. Vorrichtung (36) nach Anspruch 7, wobei:
der mindestens eine Kurbelwellenschmierfluidkanal (62) eine Durchgangsbohrung in einem Kurbelwellenlagerzapfen (14) aufweist; und/oder
die Mehrzahl von Kurbelwellenlagern (52) eine Schmierfluidlagernut (60) aufweist, die sich über einen Winkelbereich von mindestens 180° erstreckt.

9. Vorrichtung (36) nach einem der vorherigen Ansprüche, ferner aufweisend:
mindestens ein Pleuelkopflager (65), das in Fluidverbindung, insbesondere über einen Pleuellängskanal (63), stromabwärts von einem Pleuelfußlager (52) des mindestens einen Pleuelfußlagers (52) vorgesehen ist.

10. Vorrichtung (36) nach einem der Ansprüche 2 bis 9, wobei:
das mindestens eine Rädertrieblager (64) in Fluidverbindung stromabwärts von dem Schmierfluidverteilkanal (56) vorgesehen ist.

11. Vorrichtung (36) nach einem der vorherigen Ansprüche, ferner aufweisend:
eine Mehrzahl von Nockenwellenlagern (72) zum drehbaren Lagern einer Nockenwelle (22); und/oder
eine Mehrzahl von Nockenfolgerlagern (74) zum drehbaren Lagern von Nockenfolgern (28); und/oder
eine Mehrzahl von Kugelfüßen (34) an Kipphebeln (24) der Brennkraftmaschine; und/oder
mindestens eine Kolbenkühldüse (66) zum Spritzen von Schmierfluid an mindestens einen Kolben (18) der Brennkraftmaschine, der mit dem mindestens einen Pleuel (12) verbunden ist.

12. Vorrichtung (36) nach Anspruch 11, ferner aufweisend:
mindestens einen zweiten Durchflussmengenbegrenzer (70), insbesondere eine Drossel, der in Fluidverbindung stromaufwärts von der Mehrzahl von Kurbelwellenlagern, (52) der Mehrzahl von Nockenfolgerlagern (74) und/oder der Mehrzahl von Kugelfüßen (34) vorgesehen sind.

13. Vorrichtung (36) nach einem der vorherigen Ansprüche, ferner aufweisend:
eine Schmierfluidpumpe (38), die in Fluidverbindung stromaufwärts von dem mindestens einen ersten Durchflussmengenbegrenzer (57) vorgesehen ist, wobei, insbesondere:
der mindestens eine zweite Durchflussmengenbegrenzer (70), das mindestens eine Rädertrieblager (64), die Mehrzahl von Nockenwellenlagern (72), die Mehrzahl von Nockenfolgerlagern (74), die Mehrzahl von Kugelfüßen (34) und/oder die mindestens eine Kolbenkühldüse (66) in Fluidverbindung stromabwärts von der Schmierfluidpumpe (38) vorgesehen sind.

14. Vorrichtung (36) nach einem der vorherigen Ansprüche, wobei das mindestens eine Pleuelfußlager (54) und/oder die Mehrzahl von Kurbelwellenlagern (52) als Gleitlager ausgebildet sind.

15. Kraftfahrzeug, insbesondere Nutzfahrzeug, mit einer Vorrichtung (36) nach einem der vorherigen Ansprüche.

## Claims

1. A device (36) for lubricating an internal combustion engine having a crankshaft (10), which is connected to at least one connecting rod (12), having:
at least one first flow limiter (57), in particular a restrictor, for reducing a lubricating fluid flow of a lubricating fluid stream passed to the at least one first flow limiter (57);
a plurality of crankshaft bearings (52) for the rotatable support of the crankshaft (10), wherein the plurality of crankshaft bearings (52) is provided in fluid communication downstream of the at least one first flow limiter (57); and
at least one big end bearing (54) for the rotatable support of the at least one connecting rod (12), wherein the at least one big end bearing (54) is provided in fluid communication downstream of at least one crankshaft bearing (52) of the plurality of crankshaft bearings (52), **characterized by**:
at least one wheel train bearing (64) for the rotatable support of a wheel of a wheel train (46) of the internal combustion engine, wherein the at least one wheel train bearing (64) is provided in fluid communication downstream of the at least one first flow limiter (57).

2. The device (36) according to Claim 1, furthermore having:
a lubricating fluid distribution channel (56), in particular a crankshaft bearing gallery, which is provided in fluid communication upstream of the plurality of crankshaft bearings (52); and
a plurality of lubricating fluid feed channels (58), which are each provided in fluid communication downstream of the lubricating fluid distribution channel (56) and upstream of a crankshaft bearing (52) of the plurality of crankshaft bearings (52).

3. The device (36) according to Claim 2, wherein the at least one first flow limiter (57) is provided in fluid communication upstream of the lubricating fluid distribution channel (56) and/or in the lubricating fluid distribution channel (56).

4. The device (36) according to Claim 2 or Claim 3, wherein one first flow limiter (57) is arranged in each of the plurality of lubricating fluid feed channels (58).

5. The device (36) according to one of the preceding claims, wherein the at least one big end bearing (54) is provided in substantially continuous fluid communication with the at least one first flow limiter (57) via the at least one crankshaft bearing (52) of the plurality of crankshaft bearings (52), irrespective of a rotational position of the crankshaft (10).

6. The device according to Claim 5, wherein lubricating fluid channels (62), in particular lubricating fluid holes, in the crankshaft (10) and lubricating fluid bearing grooves (60) in bearing shells of the plurality of crankshaft bearings (52) are designed in such a way that the substantially continuous fluid communication with the at least one big end bearing (54) is provided.

7. The device (36) according to one of the preceding claims, wherein:
the at least one big end bearing (54) is provided in fluid communication with the at least one crankshaft bearing (52) of the plurality of crankshaft bearings (52) via at least one crankshaft lubricating fluid channel (62) provided in the crankshaft (10); and
the at least one crankshaft lubricating fluid channel (62) has at least two mutually spaced inlet openings, which open into an outer circumferential surface of a crankshaft bearing journal (14) of the crankshaft (10).

8. The device (36) according to Claim 7, wherein:
the at least one crankshaft bearing fluid channel (62) has a through hole in a crankshaft bearing journal (14); and/or
the plurality of crankshaft bearings (52) has a lubricating fluid bearing groove (60) which extends over an angular range of at least 180°.

9. The device (36) according to one of the preceding claims, furthermore having:
at least one small end bearing (65), which is provided in fluid communication, in particular via a connecting rod longitudinal channel (63), downstream of a big end bearing (52) of the at least one big end bearing (52).

10. The device (36) according to one of Claims 2 to 9, wherein:
the at least one wheel train bearing (64) is provided in fluid communication downstream of the lubricating fluid distribution channel (56).

11. The device (36) according to one of the preceding claims, furthermore having:
a plurality of camshaft bearings (72) for the rotatable support of a camshaft (22); and/or
a plurality of cam follower bearings (74) for the rotatable support of cam followers (28); and/or
a plurality of ball-joint feet (34) on rocker arms (24) of the internal combustion engine; and/or
at least one piston cooling nozzle (66) for spraying lubricating fluid onto at least one piston (18) of the internal combustion engine, which piston is connected to the at least one connecting rod (12) .

12. The device (36) according to Claim 11, furthermore having:
at least one second flow limiter (70), in particular a restrictor, which is provided in fluid communication upstream of the plurality of crankshaft bearings (52), of the plurality of cam follower bearings (74) and/or of the plurality of ball-joint feet (34).

13. The device (36) according to one of the preceding claims, furthermore having:
a lubricating fluid pump (38), which is provided in fluid communication upstream of the at least one first flow limiter (57), wherein, in particular:
the at least one second flow limiter (70), the at least one wheel train bearing (64), the plurality of camshaft bearings (72), the plurality of cam follower bearings (74), the plurality of ball-joint feet (34) and/or the at least one piston cooling nozzle (66) are provided in fluid communication downstream of the lubricating fluid pump (38).

14. The device (36) according to one of the preceding claims, wherein the at least one big end bearing (54) and/or the plurality of crankshaft bearings (52) are designed as plain bearings.

15. A motor vehicle, in particular a commercial vehicle, having a device (36) according to one of the preceding claims.

## Revendications

1. Dispositif (36) pour la lubrification d'un moteur à combustion interne comportant un vilebrequin (10) qui est relié à au moins une bielle (12), comprenant :
au moins un premier limiteur de débit (57), en particulier un étranglement, pour la réduction d'un débit d'un flux de fluide lubrifiant conduit jusqu'à l'au moins un premier limiteur de débit (57) ;
une pluralité de paliers de vilebrequin (52) pour le montage à rotation du vilebrequin (10), dans lequel la pluralité de paliers de vilebrequin (52) sont prévus en liaison fluidique en aval de l'au moins un premier limiteur de débit (57) ; et
au moins un palier de pied de bielle (54) pour le montage à rotation de l'au moins une bielle (12), dans lequel l'au moins un palier de pied de bielle (54) est prévu en liaison fluidique en aval d'au moins un palier de vilebrequin (52) de la pluralité de paliers de vilebrequin (52),
**caractérisé par** :
au moins un palier de train de roues d'engrenage (64) pour le montage à rotation d'une roue d'un train de roues d'engrenage (46) du moteur à combustion interne, l'au moins un palier de train de roues d'engrenage (64) étant prévu en liaison fluidique en aval de l'au moins un premier limiteur de débit (57).

2. Dispositif (36) selon la revendication 1, comprenant en outre :
un canal de distribution de fluide lubrifiant (56), en particulier une galerie de palier de vilebrequin, qui est prévu(e) en liaison fluidique en amont de la pluralité de paliers de vilebrequin (52) ; et
une pluralité de canaux d'amenée de fluide lubrifiant (58), qui sont prévus respectivement en liaison fluidique en aval du canal de distribution de fluide lubrifiant (56) et en amont d'un palier de vilebrequin (52) de la pluralité de paliers de vilebrequin (52).

3. Dispositif (36) selon la revendication 2, dans lequel l'au moins un premier limiteur de débit (57) est prévu en liaison fluidique en amont du canal de distribution de fluide lubrifiant (56) et/ou dans le canal de distribution de fluide lubrifiant (56).

4. Dispositif (36) selon la revendication 2 ou la revendication 3, dans lequel un premier limiteur de débit (57) est disposé dans chaque canal parmi la pluralité de canaux d'amenée de fluide lubrifiant (58).

5. Dispositif (36) selon l'une des revendications précédentes, dans lequel l'au moins un palier de pied de bielle (54) est prévu en liaison fluidique sensiblement continue avec l'au moins un premier limiteur de débit (57) par le biais de l'au moins un palier de vilebrequin (52) de la pluralité de paliers de vilebrequin (52) indépendamment d'une position angulaire du vilebrequin (10) .

6. Dispositif selon la revendication 5, dans lequel des canaux de fluide lubrifiant (62), en particulier des alésages de fluide lubrifiant, sont réalisés dans le vilebrequin (10) et des rainures de palier de fluide lubrifiant (60) sont réalisées dans des coussinets de palier de la pluralité de paliers de vilebrequin (52), de sorte que la liaison fluidique sensiblement continue par rapport à l'au moins un palier de pied de bielle (54) soit prévue.

7. Dispositif (36) selon l'une des revendications précédentes, dans lequel :
l'au moins un palier de pied de bielle (54) est prévu en liaison fluidique avec l'au moins un palier de vilebrequin (52) de la pluralité de paliers de vilebrequin (52) par le biais d'au moins un canal de fluide lubrifiant de vilebrequin (62) prévu dans le vilebrequin (10) ; et
l'au moins un canal de fluide lubrifiant de vilebrequin (62) comprend au moins deux ouvertures d'admission espacées les unes des autres, lesquelles débouchent dans une surface périphérique extérieure d'un tourillon de palier (14) du vilebrequin (10).

8. Dispositif (36) selon la revendication 7, dans lequel :
l'au moins un canal de fluide lubrifiant de vilebrequin (62) comprend un alésage traversant dans un tourillon de palier de vilebrequin (14) ; et/ou
la pluralité de paliers de vilebrequin (52) comprend une rainure de palier de fluide lubrifiant (60) qui s'étend sur une zone angulaire d'au moins 180°.

9. Dispositif (36) selon l'une des revendications précédentes, comprenant en outre :
au moins un palier de tête de bielle (65), qui est prévu en liaison fluidique, en particulier par le biais d'un canal longitudinal de bielle (63), en aval d'un palier de pied de bielle (52) de l'au moins un palier de pied de bielle (52).

10. Dispositif (36) selon l'une des revendications 2 à 9, dans lequel :
l'au moins un palier de train de roues d'engrenage (64) est prévu en liaison fluidique en aval du canal de distribution de fluide lubrifiant (56).

11. Dispositif (36) selon l'une des revendications précédentes, comprenant en outre :
une pluralité de paliers d'arbre à cames (72) pour le montage à rotation d'un arbre à cames (22) ; et/ou
une pluralité de paliers de suiveurs de came (74) pour le montage à rotation de suiveurs de came (28) ; et/ou
une pluralité de pieds à rotule (34) au niveau de culbuteurs (24) du moteur à combustion interne ; et/ou
au moins une buse de refroidissement de piston (66) pour la pulvérisation de fluide lubrifiant sur au moins un piston (18) du moteur à combustion interne, lequel piston est relié à l'au moins une bielle (12).

12. Dispositif (36) selon la revendication 11, comprenant en outre :
au moins un deuxième limiteur de débit (70), en particulier un étranglement, qui est prévu en liaison fluidique en amont de la pluralité de paliers de vilebrequin (52), de la pluralité de paliers de suiveurs de came (74) et/ou de la pluralité de pieds à rotule (34) .

13. Dispositif (36) selon l'une des revendications précédentes, comprenant en outre :
une pompe à fluide lubrifiant (38), qui est prévue en liaison fluidique en amont de l'au moins un premier limiteur de débit (57), dans lequel, en particulier :
l'au moins un deuxième limiteur de débit (70), l'au moins un palier de train de roues d'engrenage (64), la pluralité de paliers d'arbre à cames (72), la pluralité de paliers de suiveurs de came (74), la pluralité de pieds à rotule (34) et/ou l'au moins une buse de refroidissement de piston (66) sont prévus en liaison fluidique en aval de la pompe à fluide lubrifiant (38).

14. Dispositif (36) selon l'une des revendications précédentes, dans lequel l'au moins un palier de pied de bielle (54) et/ou la pluralité de paliers de vilebrequin (52) sont réalisés sous forme de paliers lisses.

15. Véhicule automobile, en particulier véhicule utilitaire, comportant un dispositif (36) selon l'une des revendications précédentes.
